# EUROPEAN PATENT SPECIFICATION

(11) **EP 1 396 139 B1**
(45) Date of publication and mention of the grant of the patent: **30.11.2005**
(21) Application number: 02776512.2
(22) Date of filing: 31.05.2002
(51) Int. Cl.: H04L 29/06

(54) **Method and systems for improving security in data communication systems**
Verfahren und Systeme zur Verbesserung der Sicherheit in einem Datenkommunikationsnetz
Procédé et systèmes pour l'amélioration de la securité dans des reseaux de communication de données

(30) Priority: 01.06.2001 IT MI20011173
(43) Date of publication of application: 10.03.2004
(73) Proprietor: Puricelli, Guido, I-20122 Milano (IT)
(72) Inventor: PURICELLI, Guido, I-20122 Milano (IT); DORNINI, Fabio, Giuseppe, I-20146 Milano (IT)
(74) Representative: Grünecker, Kinkeldey, Stockmair & Schwanhäusser Anwaltssozietät
(86) International application number: PCT/EP2002/006015
(87) International publication number: WO 2002/100061

(56) References cited:
- WO-A-00/79367
- MIYAZAWA T ET AL: "An advanced Internet XML/EDI model based on secure XML documents" PARALLEL AND DISTRIBUTED SYSEMS: WORKSHOPS, SEVENTH INTERNATIONAL CONFERENCE ON, 2000 IWATE, JAPAN 4-7 JULY 2000, LOS ALAMITOS, CA, USA,IEEE COMPUT. SOC, US, 4 July 2000 (2000-07-04), pages 295-300, XP010523886 ISBN: 0-7695-0571-6
- SCHULDT H ET AL: "Automatic generation of reliable e-commerce payment processes" WEB INFORMATION SYSTEMS ENGINEERING, 2000. PROCEEDINGS OF THE FIRST INTERNATIONAL CONFERENCE ON HONG KONG, CHINA 19-21 JUNE 2000, LOS ALAMITOS, CA, USA,IEEE COMPUT. SOC, US, 19 June 2000 (2000-06-19), pages 434-441, XP010521885 ISBN: 0-7695-0577-5

## Description

### FIELD OF THE PRESENT INVENTION

The present invention relates to the field of data communication technology; in particular, the present invention relates to a method and a system for communicating and transmitting data over a communication network such as the public switchboard telephone network, cellular phone systems, the internet, or an intranet, etc, allowing to improve the security and the reliability of the transmission. The method and the system according to the present invention finds useful application in the field of commercial transactions; in particular, the method of the present invention can be used for buying and/or ordering goods and/or services in a reliable manner over the internet. The present application also relates to a system for carrying out such a method.

### DESCRIPTION OF THE PRIOR ART

In recent years, the transmission of data by means of computer systems connected to a communication network has increased significantly and data are nowadays commonly transmitted over the communication network for several purposes. For instance, e-mail messages are daily sent and received to and from millions of users and users constantly retrieve information from intemet web sites. It is also becoming more and more usual to use the intemet for executing commercial transactions.

The most common commercial transactions for ordering goods and/or services usually carried out on the public communication networks comprise the following steps: first, a merchant displays the goods for sale, e.g., on a web page. Second, a customer orders the goods, for instance by sending a message to the web site address of the merchant. Once the message has been received by the merchant, the customer is requested to communicate the number of his credit card; if the credit card is revealed to be valid, the order is confirmed and the transfer of money from the customer's account to the merchant's account is carried out.

This technique of executing commercial transactions by using a credit card has several drawbacks. First, it is only possible to verify that the credit card is valid, but there is no possibility of verifying that the person who has communicated the number of the credit card actually corresponds to the owner of the credit card. Accordingly, anyone who gains knowledge of the number of the credit card is potentially capable of ordering and/or buying goods and/or services from one or more web sites of corresponding merchants under a false name and charging the respective amount on the credit card of the legal owner. This can be, in particular, carried out by anyone intercepting the data relating to the credit card on the communication network as well as by the manager of the web site of the merchant; for instance, managers of the web sites of the merchants could modify the amount corresponding to the transactions disposed by the legal owner of the credit card or the data intercepted could be used for transferring amounts relating to fictitious transactions. Finally, the data intercepted could be communicated to third parties for illegal purposes.

A second disadvantage of the technique of executing commercial transactions according to the prior art relates to the fact that the user is not able to verify whether the web site really corresponds to a merchant who is in a position to furnish the offered goods and/or services.

A further drawback of the technique of executing commercial transactions according to the prior art relate to the fact that the confidential data relating to both the owner of the credit card and the completed order have to be communicated over the communication network; it cannot therefore be excluded that, in spite of all security measures taken, data can be intercepted and misused. In particular, this is the reason why, at present, it is sometimes inconvenient to use a credit card for executing commercial transactions via the internet.

Many efforts have been made in the art for overcoming the above-explained disadvantages and, correspondingly, several transaction methods have been developed and proposed; for instance, so-called S.E.T. (Secure Electronic Transaction) methods have been proposed, according to which the confidential data are encoded and decoded in an attempt of guarantying the identity of those involved in a transaction and the confidentiality of the data transmitted. However, these methods are rather complicated and expensive and the level of security obtained is mostly not satisfying.

An example of a system for transmitting data over a computer network can be found in the document: Proceedings of the First International Conference on Hong Kong, China 19-21 June 2000, Los Alamitos, CA, USA, IEEE Comput. Schuldt H et al: "Automatic generation of reliable e-commerce payment processes" WEB Information Systems Engineering, 2000. SOC, US, 19 June 2000 (2000-06-19), pages 434-441, XP01521885 ISBN: 0-7695-0577-5.

The system known from this document comprises at least a first computer system and a second computer system adapted to be connected to the communication network, wherein said at least first computer system is adapted to send at least a first message to the at least second computer system, with said first message containing a first code, a second code and data.

Further examples of systems for transmitting data over a computer network are given in documents WO 00 79367 A and Miyazawa T et al: "An advanced Internet XML/EDI model based on secure XML documents" Parallel and Distributed Sysems: Workshops, Seventh International Conference on, 2000 IWATE, Japan 4-7 July 2000, Los Alamitos, CA, USA, IEEE Comput. Soc, US, 4 July 2000 (2000-07-04), pages 295-300, XP010523886 ISBN: 0-7695-0571-6.

Accordingly, in view of the problems explained above, it would be desirable to provide a technique that may be used e. g. for executing commercial transactions over a communication network, thereby solving or at least reducing one or more of these problems.

### SUMMARY OF THE INVENTION

According to a first embodiment of the present invention as claimed in claim 1, this is achieved by providing an improved method of transmitting data over a communication network to which at least three computer systems are connected, wherein said method comprises sending a first message from a first one of said at least three computer systems to a second one of said at least three computer systems, with said first message containing at least a first code and data. Additionally, the inventive method comprises sending a second message from the second computer system to at least one of the at least three computer systems, with said second message containing a second code as well as the first code and the data. Furthermore, the method comprises sending a third message from the first computer system to the third computer system, with said third message containing a third code as well as encoded data containing the second code and the data. Moreover, according to the method of the present invention, the third computer system performs the steps of: decoding the encoded data to extract the second code and the data from the encoded data; generating a fourth code on the basis of the third code; comparing the extracted data with the data contained in the second message; comparing the extracted code with the second code contained in the second message; comparing the fourth code with the first code contained in the second message.

According to another aspect of the present invention as claimed in claim 14 there is further provided a system for transmitting data over a computer network, wherein said system comprises at least a first computer system, a second computer system and a third computer system adapted to be connected to the communication network, with said at least first computer system being adapted to send at least a first message to at least the second computer system, with said first message containing at least a first code and additional data. Moreover, according to the inventive system, said at least second computer system is adapted to send at least a second message to the third computer system, with said second message containing a second code as well as the first code and the additional data. Furthermore, according to the system of the present invention, said at least first computer system is adapted to send at least a third message to the at least third computer system, with said third message containing a third code as well as encoded data containing the second code and the additional data. Additionally, said at least third computer system comprises means for performing the following steps: decoding the encoded data to extract the second code and the additional data; generating a fourth code on the basis of the third code; comparing the extracted data with the additional data contained in the second message; comparing the extracted code with the second code contained in the second message; comparing the fourth code with the first code contained in the second message.

According to a still preferred embodiment of the present invention as claimed in claim 25 there is provided a system for transmitting data over a computer network, with said system comprising at least a first computer system and a second computer system both adapted to be connected to the communication network, wherein said at least first computer system is adapted to send at least a first message to the at least second computer system, with said first message containing a first code as well as encoded data containing a second code and additional data. Moreover, according to the system of the this preferred embodiment of the present invention, said at least second computer system comprising means for performing the following steps: decoding the encoded data to extract the second code and the additional data from the encoded data; generating a third code on the basis of the first code; comparing the extracted additional data with corresponding data contained in a second message; comparing the extracted code with a corresponding code contained in the second message; comparing the third code with a corresponding code contained in the second message.

Further preferred embodiments of the present invention are defined in the appended dependent claims.

The method according to the present invention is based on the following concepts.

The user and the merchant communicate on a specific channel by using predefined codes (a first code identifying the user and, optionally, a second code identifying the merchant).

The user and the account manager communicate on another specific channel and the user transmits to the account manager a third code identifying the user as well as encoded data containing the second code identifying the merchant and data relating to the order. The encoded data are encoded by the user according to a predefined encoding key. Correspondingly, the encoded data are decode by the account manager according to a predefined decoding key assigned to the encoding key used by the user.

The merchant and the account manager communicate on still another specific channel and the merchant transmits to the account manager the first code identifying the user, the second code identifying the merchant and the data relating to the order.

The account manager decodes the encoded data received by the user and generates a fourth code identifying the user on the basis of the third code identifying the user. By decoding the encoded data, comparing the fourth generated code identifying the user with the code identifying the user as submitted by the merchant and comparing the data contained in the messages received by the user and the merchant, the account manager verifies the identity of both the user and the merchant as well as the data relating to the order. Only once the identity of the subjects of the transactions has been verified, the order is executed and the transfer of the corresponding amount from the account of the user to the account of the merchant is disposed.

By preventing unauthorized subjects from gaining access to the confidential data of the user and by avoiding manipulation of the data relating to the order specified in the transaction, the method and the system according to the present invention allow the avoidance of any interference by unauthorized subjects as well as any other manipulation. In case of manipulation and/or unauthorized interference, the transaction is stopped.

The messages sent during a transaction executed according to the method of the present invention are at least partially encoded and none of said messages contain the entire data relating to the order and the identity of the subjects involved in the transaction.

Accordingly, in order to be able to execute an unauthorized transaction, a fraudulent person would first have to execute the following operations:
- steal the user's credit card or intercept the number of the credit card over the internet; (when another card is used, for instance a card specially delivered to users who intend to use the present method, said special card or even another similar document should be stolen)
- steal the list of the encoding keys used for encoding the data contained in the message sent from the user to the account manager as well as the code identifying said list;
- violate, via the communication network, the server of the account manager so as to obtain the copies of the encoding and decoding keys assigned to the user;
- steal the code identifying the user;
- send to the account manager over the communication network the data relating to the fictional transaction and firstly assume the identity of the user and then that of the merchant.
- to be a real merchant; in fact, if the identifying code transmitted to the account manager does not correspond to that of an authorized merchant the account manager prevents any transfer of money.

As a result, it is highly unlikely that all of these operations could be carried out.

Furthermore, according to a preferred embodiment of the method of the present invention, once the transaction has been executed, the encoding keys used by the user are deactivated and can no longer be used.

Fraud on the part of the merchant is also avoided since the account manager does not confirm transfers of amounts other than those indicated by the user. Moreover, by means of the code identifying the merchant, the user could recognize the identity of a merchant who manipulates the data of the order.

The method according to the present invention is of great advantage to the account manager as well; in fact, the account manager acts as an arbitrator of the transactions, since he is able to identify the identity of the participants in the transaction as well as the information transmitted by the same before the authorization is given to transfer any amount, thereby reducing the probability that fraud will be committed.

The codes used for at least partially encoding the data contained in the messages, together with the way said codes are communicated to the user as well as the double control of the data of the transaction, render the method according to the present invention suitable for execution commercial transactions with minimum risk yet with very high ease.

### BRIEF DESCRIPTION OF THE DRAWINGS

Further advantages, objects and features as well as embodiments of the present invention as defined in the appended claims will become more apparent with the following detailed description when taken with reference to the accompanying drawings in which identical or corresponding parts are identified by the same reference numerals. In particular, in the drawings:

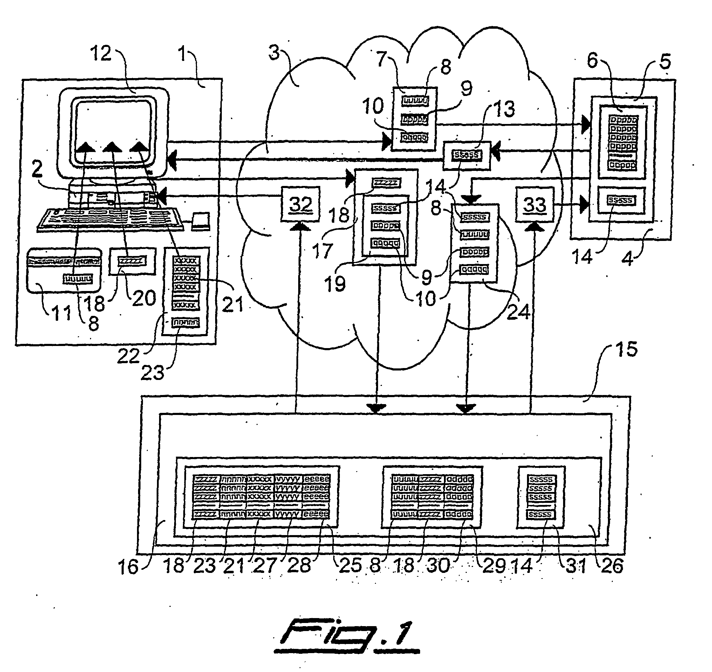

Fig. 1 represents in a schematic way a flow chart of a preferred embodiment of the method according to the present invention; moreover, in Fig. 1 there are depicted the essential parts of a preferred embodiment of the system according to the present invention adapted for executing the inventive method.

### DETAILED DESCRIPTION OF THE INVENTION

While the present invention is described with reference to the embodiments as illustrated in the following detailed description as well as in Fig. 1, it should be understood that the following detailed description as well as Fig. 1 are not intended to limit the present invention to the particular illustrated embodiments disclosed, but rather the described illustrated embodiments merely exemplify various aspects of the present invention, the scope of which is defined by the appended claims.

With reference to Fig. 1, it is apparent that according to the preferred embodiment of the method and system of the present invention depicted therein, a user 1 is supplied in a usual way with at least a device 2 for gaining access to a communication network 3, such as, for instance, the internet. Said device 2 may comprise, for instance, a personal computer, a mobile phone GSM equipped with WAP or GPRS technology, a UMTS mobile phone, a web television or a similar device equipped with a software or hardware suitable for gaining access to the communication network 3 and/or for communicating through said communication network 3. By means of the access device 2, the user 1 may contact a merchant 4, for instance, by sending an e-mail message or by visiting one or more sites of a web site received in at least one processor 5, such as a web server or the like, connected to the communication network 3. In this way, the user 1 is able to select and order in a usual way one or more goods and/or services offered by the merchant 4. To this end, the processor 5 may comprise a database 6 containing a plurality of data records relating to the goods and/or services offered by the merchant 4. For instance, said data may comprise a description as well as a digital image along with the price of such goods and/or services. For the purpose of executing the order, the user 1 sends a message 7 to the merchant 4 through the communication network 3, with said message 7 containing at least a first code 8 identifying the user as well as other data, such as, for example, data 9 relating to the goods and/or services ordered and the prices of said goods and/or services. Additional data 10 may be contained in the message, such as, for example, the quantity and the delivery date of the goods and/or services ordered. The data 9 may correspond to one or more of the records contained in the data base 6 and the first code 8 identifying the user may, for instance, correspond to the number of the credit and/or debit cards of the user; alternatively, the first code 8 may correspond to the checksum number of the credit card of the user. The credit card may be one of the common credit cards, such as a Visa Card or MasterCard, or a credit card specially delivered to users who intend to execute commercial transactions according to the method of the present invention. Whichever card is used, said card may contain additional data of the user, for instance memorized in a magnetic band and/or a microchip. In addition, the first code may be memorized in said magnetic band and/or microchip. Submitting and/or sending the order by the user 1 to the merchant 4 may be executed in a usual way, for instance by using at least a page sent by the processor 5 and displayed on a screen 12 connected to the processing device 2. Said page may contain fields which can be filled in by the user 1 with the data requested as well as other useful information, such as, for example, a logo and/or mark certifying that the merchant 4 is allowed to execute the transaction according to the method of the present invention. Once the order 7 is received by the merchant 4, the merchant 4 may send to the user 1 a message 13, for instance an e-mail, by means of a processor, with said message 13 containing the confirmation of receipt of the order 7 along with a code 14 identifying the merchant 4 memorized in the processor. The message 13 may also contain a further code, namely a code identifying the transaction (ID transaction), with said ID transaction having been previously assigned to the transaction by the merchant. Alternatively, the code 14 identifying the merchant may be previously communicated to the user, for instance by means of a posted letter. The processor used by the merchant for replying to the user by sending the message 13 may be the same processor 5 used for receiving the message 7 sent by the user 1. The message 13 may also contain a request that the order be confirmed by an account manager 15; also the account manager 15 may be equipped with a processor 16, for instance a web server connected to the communication network 3. For instance, the account manager 15 may be, a bank and/or an institute for managing credit and/or debit cards. According to a preferred embodiment, the account manager 15 previously assigns to the merchant 4 a code 14 identifying the merchant; in particular, said code 14 may be assigned to the merchant after a contract has been signed and the merchant 14 has been enabled and/or qualified to execute transactions according to the method of the present invention.

Still according to the present invention, the user 1, in order to confirm the order 7, sends a message 17 over the communication network 3 to a processor 16 of the account manager 15. For instance, said message 17 may be an e-mail containing a personal code 18 identifying the user 1 together with encoded data 19. Said personal code 18 may be a code previously furnished by the account manager 15 to the user 1; in particular, said personal code 18 may be submitted to the user with a posted letter or in person or in some other equivalent direct manner. Preferably, the personal code 18 is not furnished to the user 1 over the communication network 3. For instance, said personal code 18 may correspond to the pin number associated with the credit and/or debit card of the user 1 or even the number of the credit card of the user. The package of encoded data 19 may contain the code 14 identifying the merchant 4 and the data 9 and 10 relating to the order 7. Alternatively, the encoded data 19 may also contain the code identifying the transaction ID transaction), submitted by the merchant 4 to the user 1 with the message 13. Said data 19 are encoded by means of a program of a kind known in the art, with said program being executed by the device 2 according to a predefined coding key 21 inserted by the user 1 into the device 2. For instance, said encoding program may comprise an applet Java and may have been previously sent from the account manager 15 to the user 1 on a memory support such as a floppy disk; alternatively said encoding program may be transmitted in real time through the communication network 3. Preferably, the encoding key 21 has not been submitted from the account manager 15 to the user 1 through the communication network 3, but by means of postal delivery or in person or even in some other direct manner. When the encoding key 21 is communicated by means of a message 22 on paper (for instance, a letter), said message is also provided with its own identifying code 23 and preferably contains a list of encoding keys 21 to be used only once. In order to be enabled to use the list of encoding keys 21, the user 1 has previously sent to the account 15, for instance through the communication network 3, confirmation of receipt comprising the personal code 18 and the code 23 identifying the list.

At the same time, the merchant 4 requests that the transactions be executed by sending a message 24 to the account manager over a processor connected to the communication network 3. For instance, said processor may be the same processor 5. The message 24 may be an e-mail containing the code 14 identifying the merchant, the first code 8 identifying the user, and the data 9, 10 relating to the order.

Once the messages 17 and 24 have been received by the merchant 15, a processor 16 of the account manager 15 selects a decoding key 27 from a table 25 contained in a database 26; said decoding key 27 is selected on the basis of the second code 18 identifying the user contained in the message 17. Pairs of the encoding and decoding keys 21 and 27, which have been assigned to each other and to the codes 23 identifying the lists 22, are also contained in the table 25; said encoding and decoding keys 21 and 27 are also assigned to the codes 18 identifying the users who have received said lists as well as to a variable 28 indicating that the keys 21 and 27 have been used. The variable 28 changes its value each time a pair of the keys 21 and 27 is used. Once the keys 21 and 27 have been used, the decoding keys 27 and the corresponding records in the table 25 may be cancelled. The decoding key 27 used for decoding the data of a predefined message is the first key of those assigned to the user 1 who sends the message 17; which have not yet been used. Said decoding key 27 is used by the processor 16 together with the decoding program to obtain the data contained in the package 19 of encoded data, namely the code 14 identifying the merchant and the data 9 and 10 relating to the order.

Furthermore, the processor 16 extracts or generates from a table 29 a further code identifying the user 1 on the basis of to the personal code 18 contained in the message 17. As it will be apparent in the following, said further code identifying the user normally corresponds to the first code 8 identifying the user. If the further code generated corresponds to the first code 8 and other conditions are met the transaction can be executed. If the further code generated does not correspond to the first code or other conditions are not met the transaction is stopped. The table 29 may be contained in the database 26 and contains the pairs of codes 18 submitted to the users 1 and the further codes to be generated (normally corresponding the first codes 8), as well as other data such as, for example, the name and the address of the users. The processor 16 comprises a table 31 contained in the database 26, with said table 31 containing, in turn, the codes 14 identifying the merchants 4 enabled to execute transactions according to the method of the present invention.

Once the further code (normally corresponding to the code 8) contained in the table 29 as well as the code 14 identifying the merchant 4 and the data 9 and 10 contained in the message 17 have been obtained, the processor 16 checks whether the code 14 identifying the merchant 4 is contained or not in the table 31; if the code 14 is contained in the table 31, the processor 16 checks whether a message has been received, for instance a message 24, and whether the code 14 contained in said message 24 corresponds to the code 14 contained in the table 31. If such a message has not been received, the processor 16 stands in standby waiting to receive such a message; on the other hand, namely if such a message has been received, the processor 16 checks whether other data contained in the messages 17 and 24 received from the user 1 and the merchant 4 correspond; in particular, the processor 16 checks whether the decoded data 9 and 10 extracted from the message 17 and relating to the order correspond to the data 9 and 10 contained in the message 24. Moreover, the processor 16 checks whether the further code as extracted from the table 29 corresponds to the code 8 identifying the user 1 as contained in the message 24. If the data corresponds the processor 16 confirms and/or executes the transaction, for instance charging the user 1 an amount corresponding to that indicated in the data 9 relating to the order; in the same way, a corresponding amount is transferred to the merchant 4, eventually minus a provision for the service rendered.

If the message 24 is not received within a predefined time limit, for instance within the delivery date indicated in the data 10 relating to the order, and if further conditions necessary for the execution of the transaction are not met, the transaction is not executed. For instance, if comparing the data contained in the messages 17 and 24 reveals that the data do not correspond the transaction is stopped. Other conditions may comprise a confirmation message either from the user 1 or the merchant 4; the transaction is also not executed in the case that the message 24 is received but said message 24 does not correspond to the message 17.

The fact that the transaction has not been executed or has not been executed property may be communicated from the account manager 15 to the user 1 and/or to the merchant 4 by sending corresponding messages 32, 33 by means of the processor 16; for instance, said messages may contain e-mails sent over the communication network 3.

Of course, it should be understood that a wide range of changes and modifications can be made to the embodiments described above without departing from the scope of the invention. For instance, it appears clearly to those skilled in the art that the system according to the present invention for executing commercial transactions may comprise a plurality of users 1 as well as a plurality of merchants 4 and account managers 15; each of said subjects may, in turn, be provided with a plurality of devices and/or processors for obtaining access to the communication network 3 as well for executing one or more steps of the method according to the present invention.

It is therefore understood that it is the claims, which are intended to define the scope of the invention. It is also to be noted that the forms of the present invention described therein represent the presently preferred embodiments.

## Claims

1. A method of transmitting data over a communication network (3) to which at least three computer systems (2, 5, 16) are connected, said method comprising:
sending a first message (7) from a first one (2) of said at least three computer systems to a second one (5) of said at least three computer systems (5), with said first message (7) containing at least a first code (8) and data (9, 10);
sending a second message (24) from the second computer system (5) to at least a third one (16) of the at least three computer systems, with said second message (24) containing a second code (14) as well as the first code (8) and the data (9, 10);
sending a third message (17) from the first computer system (2) to the third computer system (16), with said third message (17) containing a third code (18)
**characterized in that**
said third message further contains encoded data (19) containing the second code (14) and the data (9, 10) and **in that** the third computer system (16) performs the steps of:
decoding the encoded data (19) to extract the second code (14) and the data (9, 10) from the encoded data (19);
generating a fourth code on the basis of the third code (18);
comparing the extracted data (9, 10) with the data (9, 10) contained in the second message (24);
comparing the extracted code (14) with the second code (14) contained in the second message (24);
comparing the fourth code with the first code (8) contained in the second message (24).

2. A method as claimed in claim 1, wherein further messages (32, 33) are sent by the third computer system (16) to the first and second computer systems (2, 5) depending on the result of the at least one comparison steps.

3. A method as claimed in one of claims 1 to 2, wherein the second computer system (5), after receipt of the first message (7), sends a fourth message (13) to the first computer system (2) containing a confirmation of receipt of the first message (7) as well as the second code (14).

4. A method as claimed in one of the claims 1 to 3, wherein a transaction is stopped if the fourth code does not correspond to the first code (8) contained in the second message (24).

5. A method as claimed in one of claims 1 to 4, wherein a transaction is stopped if the extracted data (9, 10) do not correspond to the data (9, 10) contained in the second message (24).

6. A method as claimed in one of claims 1 to 5, wherein a transaction is stopped if the extracted code (14) does not correspond to the code (14) contained in the second message (24).

7. A method as claimed in one of claims 1 to 6, wherein the encoded data (19) contained in the third message (17) are encoded by means of a program executed by the computer system (2) according to an encoding key (21).

8. A method as claimed in one of claims 1 to 7, wherein the encoded data (19) contained in the third message (17) are decoded by means of a computer program executed by the computer system (16) according to a decoding key (27).

9. A method as claimed in claim 8, wherein the decoding key (27) is assigned to the third code (18) and contained, together with said third code (18), in a data base (26) connected to the third computer system (16).

10. A method as claimed in claim 9, wherein the decoding key (27) is disabled or cancelled after use.

11. A system for transmitting data over a computer network (3), said system comprising at least a first computer system (2), a second computer system (5) and a third computer system (16) adapted to be connected to the communication network (3), wherein
said at least first computer system (2) is adapted to send at least a first message (7) to at least the second computer system (5), with said first message (7) containing at least a first code (8) and data (9, 10);
said at least second computer system (5) is adapted to send at least a second message (24) to the third computer system (16), with said second message (24) containing a second code (14) as well as the first code (8) and the data (9, 10);
said at least first computer system (2) is adapted to send at least a third message (17) to the at least third computer system (16), with said third message (17) containing a third code (18) as well as encoded data (19) containing the second code (14) and the data (9, 10);
**characterized in that**
said first computer system (2) is adapted to encode said second code (14) and the data (9, 10) and **in that** said at least third computer system (16) comprises means for performing the following steps:
decoding the encoded data (19) to extract the second code (14) and the data (9, 10) from the encoded data (19);
generating a fourth code on the basis of the third code (18);
comparing the extracted data (9, 10) with the data (9, 10) contained in the second message (24);
comparing the extracted code (14) with the second code (14) contained in the second message (24),
comparing the fourth code with the first code (8) contained in the second message (24).

12. A system as claimed in claim 11, wherein the third computer system (16) is adapted to send further messages (32, 33) to the first and second computer systems (2, 5) depending on the result of at least one of the comparison steps.

13. A system as claimed in one of claims 11 to 12, wherein the second computer system (5) is adapted to send a fourth message (13) to the first computer system (2) after receipt of the first message (7), with said fourth message (13) containing a confirmation of receipt of the first message (7) as well as the second code (14).

14. A system as claimed in claims 11 to 13, wherein the third computer system (16) further comprises means for stopping a transaction if the fourth code generated does not correspond to the first code (8) contained in the second message (24).

15. A system as claimed in one of claims 11 to 14, wherein the third computer system (16) further comprises means for stopping a transaction if the extracted data (9, 10) do not correspond to the data (9, 10) contained in the second message (24).

16. A system as claimed in one of claims 11 to 15, wherein the third computer system (16) further comprises means for stopping a transaction is the extracted code (14) does not correspond to the second code (14) contained in the second message (24).

17. A system as claimed in one of claims 11 to 16, wherein the first computer system (2) is adapted to execute a program for encoding the data (19) contained in the third message (17) according to an encoding key (21).

18. A system as claimed in one of claims 11 to 17, wherein the third computer system (16) is adapted to execute a program for decoding the encoded data (19) contained in the third message (17) according to a decoding key (27).

19. A system as claimed in claim 18, wherein the third computer system (16) is connected to a data base (26) containing the decoding key (27) and the code (18).

20. A system for transmitting data over a computer network (3), said system comprising at least a first computer system (2) and a second computer system (16) adapted to be connected to the communication network (3), wherein
said at least first computer system (2) is adapted to send at least a first message (17) to the at least second computer system (16), with said first message (17) containing a first code (18) as well as encoded data (19) containing a second code (14) and data (9, 10);
**characterized in that**
said first computer system (2) is adapted to encode said second code (14) and data (9, 10) and **in that** said at least second computer system (16) comprises means for performing the following steps:
decoding the encoded data (19) contained in the first message (17) to extract the second code (14) and the data (9, 10) from the encoded data (19);
generating a third code on the basis of the first code (18);
comparing the extracted data (9, 10) with the corresponding data (9, 10) contained in a second message (24);
comparing the extracted code (14) with a corresponding code (14) contained in the second message (24);
comparing the third code with a corresponding code (8) contained in the second message (24).

21. A system as claimed in claim 20, wherein the second computer system (16) is adapted to send further messages (32, 33) to the first computer system (2) depending on the result of at least one of the comparison steps.

22. A system as claimed in claims 20 to 21, wherein the second computer system (16) further comprises means for stopping a transaction if the third code generated does not correspond to the code (8) contained in the second message (24).

23. A system as claimed in one of claims 20 to 22, wherein the second computer system (16) further comprises means for stopping a transaction if the data (9, 10) extracted from the first message (17) do not correspond to the data (9, 10) contained in the second message (24).

24. A system as claimed in one of claims 20 to 23, wherein the computer system (16) further comprises means for stopping a transaction if the code extracted from the first message (17) does not correspond to the code (14) contained in the second message (24).

25. A system as claimed in one of claims 20 to 24, wherein the first computer system (2) is adapted to execute a program for encoding the data (19) according to an encoding key (21).

26. A system as claimed in one of claims 20 to 25, wherein the second computer system (16) is adapted to execute a program for decoding the encoded data (19) according to a decoding key (27).

27. A system as claimed in claim 26, wherein the second computer system (16) is connected to a data base (26) containing the decoding key (27) and the third code.

## Patentansprüche

1. Verfahren zur Übertragung von Daten über ein Netzwerk (3), mit dem zumindest drei Computersysteme (2, 5, 16) verbunden sind, wobei das Verfahren umfasst:
Senden einer ersten Nachricht (7) von einem ersten (2) von diesen zumindest drei Computersystemen an ein zweites (5) von diesen zumindest drei Computer-Systemen (5), wobei die erste Nachricht (7) zumindest eine erste Kodierung (8) und Daten (9, 10) enthält;
Senden einer zweiten Nachricht (24) von dem zweiten Computer-System (5) an zumindest ein drittes (16) von den zumindest drei Computer-Systemen, wobei die zweite Nachricht (24) eine zweite Kodierung (14), die erste Kodierung (8) und die Daten (9, 10) enthält;
Senden einer dritten Nachricht (17) von dem ersten Computer-System (2) an das dritte Computer-System (16), wobei die dritte Nachricht (17) eine dritte Kodierung (18) enthält,
**dadurch gekennzeichnet, dass**:
die dritte Nachricht weiterhin kodierte Daten (19) enthält, die die zweite Kodierung (14) und die Daten (9, 10) umfassen, und dass das dritte Computer-System (16) die folgenden Schritte ausführt:
Dekodieren der kodierten Daten (19), um die zweite Kodierung (14) und die Daten (9, 10) aus den kodierten Daten (19) zu gewinnen;
Generieren einer vierten Kodierung auf der Basis der dritten Kodierung (18);
Vergleichen der gewonnenen Daten (9, 10) mit den in der zweiten Nachricht (24) enthaltenen Daten (9, 10);
Vergleichen der gewonnenen Kodierung (14) mit der zweiten (14), in der zweiten Nachricht (24) enthaltenen Kodierung (14);
Vergleichen der vierten Kodierung mit der ersten, in der zweiten Nachricht (24) enthaltenen Kodierung (8).

2. Verfahren gemäß Anspruch 1, wobei weitere Nachrichten (32, 33) von dem dritten Computer-System (16) an das erste und zweite Computer-System (2, 5) in Abhängigkeit von dem Ergebnis des zumindest einen Vergleichsschritts gesendet werden.

3. Verfahren gemäß einem der Ansprüche 1 oder 2, wobei das zweite Computer-System (5), nach Empfang der ersten Nachricht (7), eine vierte Nachricht (13) an das erste Computer-System (2) sendet, die eine Empfangsbestätigung der ersten Nachricht (7) sowie die zweite Kodierung (14) enthält.

4. Verfahren gemäß einem der Ansprüche 1 bis 3, wobei eine Transaktion abgebrochen wird, wenn die zweite Kodierung nicht der ersten Kodierung (8) entspricht, die in der zweiten Nachricht (24) enthalten ist.

5. Verfahren gemäß einem der Ansprüche 1 bis 4, wobei eine Transaktion abgebrochen wird, wenn die gewonnenen Daten (9, 10) nicht den Daten (9, 10) entsprechen, die in der zweiten Nachricht (24) enthalten sind.

6. Verfahren gemäß einem der Ansprüche 1 bis 5, wobei eine Transaktion abgebrochen wird, wenn die gewonnene Kodierung (14) nicht der Kodierung (14) entspricht, die in der zweiten Nachricht (24) enthalten ist.

7. Verfahren gemäß einem der Ansprüche 1 bis 6, wobei die kodierten Daten (19), die in der dritten Nachricht (17) enthalten sind, mittels einem Programm kodiert werden, das von dem Computer-System (2) gemäß einem Kodierungsschlüssel (21) durchgeführt wird.

8. Verfahren gemäß einem der Ansprüche 1 bis 7, wobei die kodierten Daten (19), die in der dritten Nachricht (17) enthalten sind, mittels einem Computer-Programm dekodiert werden, das von dem Computer-System (16) gemäß einem Dekodierungsschlüssel (27) durchgeführt wird.

9. Verfahren gemäß Anspruch 8, wobei der Dekodierungsschlüssel (27) der dritten Kodierung (18) zugeordnet wird, und wobei der Dekodierungsschlüssel (27) zusammen mit der dritten Kodierung (18) in einer Datenbank (26) enthalten ist, die mit dem dritten Computer-System (16) verbunden ist.

10. Verfahren gemäß Anspruch 9, wobei der Dekodierungsschlüssel (27) nach Gebrauch deaktiviert oder gelöscht wird.

11. System zur Übertragung von Daten über ein Computer-Netzwerk (3), wobei das System zumindest ein erstes Computer-System (2), ein zweites Computer-System (5) und ein drittes Computer-System (16) umfasst, das geeignet ist, mit dem Kommunikationsnetzwerk (3) verbunden zu werden, und wobei
das zumindest erste Computer-System (2) geeignet ist, zumindest eine erste Nachricht (7) an zumindest das zweite Computer-System (5) zu senden, wobei diese erste Nachricht (7) zumindest eine erste Kodierung (8) und Daten (9, 10) enthält;
das zumindest zweite Computer-System (5) geeignet ist, zumindest eine zweite Nachricht (24) an das dritte Computer-System (16) zu senden, wobei die zweite Nachricht (24) eine zweite Kodierung (14), die erste Kodierung (8) und die Daten (9, 10) enthält;
das zumindest erste Computer-System (2) geeignet ist, zumindest eine dritte Nachricht (17) an das zumindest dritte Computer-System (16) zu senden, wobei die dritte Nachricht (17) eine dritte Kodierung (18) und kodierte Daten (19) enthält, die die zweite Kodierung (14) und die Daten (9, 10) enthalten;
**dadurch gekennzeichnet, dass**
das erste Computer-System (2) geeignet ist, die zweite Kodierung (14) und die Daten (9, 10) zu kodieren, und das zumindest dritte Computer-System (16) Mittel umfasst, um die folgenden Schritte auszuführen:
Dekodieren der kodierten Daten (19), um die zweite Kodierung (14) und die Daten (9, 10) aus den kodierten Daten (19) zu gewinnen;
Generieren einer vierten Kodierung auf der Basis der dritten Kodierung (18);
Vergleichen der gewonnenen Daten (9, 10) mit den Daten (9, 10), die in der zweiten Nachricht (24) enthalten sind;
Vergleichen der gewonnenen Kodierung (14) mit der zweiten Kodierung (14), die in der zweiten Nachricht (24) enthalten ist;
Vergleichen der vierten Kodierung mit der ersten Kodierung (8), die in der zweiten Nachricht (24) enthalten ist.

12. System gemäß Anspruch 11, wobei das dritte Computer-System (16) geeignet ist, weitere Nachrichten (32, 33) an das erste und das zweite Computer-System (2, 5) zu senden, in Abhängigkeit von dem Ergebnis von zumindest einem der Vergleichsschritte.

13. System gemäß einem der Ansprüche 11 oder 12, wobei das zweite Computer-System (5) geeignet ist, eine vierte Nachricht (13) an das erste Computer-System (2) nach Empfang der ersten Nachricht (7) zu senden, wobei die vierte Nachricht (13) eine Empfangsbestätigung der ersten Nachricht (7) sowie die zweite Kodierung (14) enthält.

14. System gemäß einem der Ansprüche 11 bis 13, wobei das dritte Computer-System (16) weiterhin Mittel umfasst, um eine Transaktion abzubrechen, wenn die vierte, generierte Kodierung nicht der ersten Kodierung (8) entspricht, die in der zweiten Nachricht (24) enthalten ist.

15. System gemäß einem der Ansprüche 11 bis 14, wobei das dritte Computer-System (16) weiterhin Mittel umfasst, um eine Transaktion abzubrechen, wenn die gewonnenen Daten (9, 10) nicht den Daten (9, 10) entsprechen, die in der zweiten Nachricht (24) enthalten sind.

16. System einem der Ansprüche 11 bis 15, wobei das dritte Computer-System (16) weiterhin Mittel umfasst, um eine Transaktion abzubrechen, wenn die gewonnene Kodierung (14) nicht der zweiten Kodierung (14) entspricht, die in der zweiten Nachricht (24) enthalten ist.

17. System gemäß einem der Ansprüche 11 bis 16, wobei das erste Computer-System (2) geeignet ist, ein Programm durchzuführen, um die in der dritten Nachricht (17) enthaltenen Daten (19) gemäß einem Kodierungsschlüssel (21) zu kodieren.

18. System gemäß einem der Ansprüche 11 bis 17, wobei das dritte Computer-System (16) geeignet ist, ein Programm durchzuführen, um die in der dritten Nachricht (17) enthaltenen kodierten Daten (19) gemäß einem der Kodierungsschlüssel (27) zu dekodieren.

19. System gemäß Anspruch 18, wobei das dritte Computer-System (16) mit einer Datenbank (26) verbunden ist, die den Dekodierungsschlüssel (27) und die Kodierung (18) enthält.

20. System zur Übertragung von Daten über ein Computer-Netzwerk (3), wobei dieses System zumindest ein erstes Computer-System (2) und ein zweites Computer-System (16) umfasst, das geeignet ist mit dem Kommunikationsnetzwerk (3) verbunden zu werden, und wobei
das zumindest erste Computer-System (2) geeignet ist, zumindest eine erste Nachricht (17) an das zumindest zweite Computer-System (16) zu senden, wobei die erste Nachricht (17) eine erste Kodierung (18) und kodierte Daten (19) enthält, und wobei die kodierten Daten (19) eine zweite Kodierung (14) und Daten (9, 10) umfassen;
**dadurch gekennzeichnet, dass**
das erste Computer-System (2) geeignet ist, die zweite Kodierung (14) und Daten (9, 10) zu kodieren, und das zumindest zweite Computer-System (16) Mittel umfasst, um die folgenden Schritte auszuführen:
Dekodieren der kodierten Daten (19), die in der ersten Nachricht (17) enthalten sind, um die zweite Kodierung (14) und die Daten (9, 10) aus den kodierten Daten (19) zu gewinnen;
Generieren einer dritten Kodierung auf der Basis der ersten Kodierung (18);
Vergleichen der gewonnenen Daten (9, 10) mit den entsprechenden Daten (9, 10), die in der zweiten Nachricht (24) enthalten sind;
Vergleichen der gewonnenen Kodierung (14) mit einer entsprechenden Kodierung (14), die in der zweiten Nachricht (24) enthalten ist;
Vergleichen der dritten Kodierung mit einer entsprechenden Kodierung (8), die in der zweiten Nachricht (24) enthalten ist.

21. System gemäß Anspruch 20, wobei das zweite Computer-System (16) geeignet ist, weitere Nachrichten (32, 33) an das erste Computer-System (2) zu senden, in Abhängigkeit von dem Ergebnis von zumindest einem der Vergleichungsschritte.

22. System gemäß einem der Ansprüche 20 bis 21, wobei das zweite Computer-System (16) weiterhin Mittel umfasst, um eine Transaktion abzubrechen, wenn die dritte, generierte Kodierung nicht der Kodierung (8) entspricht, die in der zweiten Nachricht (24) enthalten ist.

23. System gemäß einem der Ansprüche 20 bis 22, wobei das zweite Computer-System (16) weiterhin Mittel umfasst, um eine Transaktion abzubrechen, wenn die aus der ersten Nachricht (17) gewonnenen Daten (9, 10) nicht den Daten (9, 10) entsprechen, die in der zweiten Nachricht (24) enthalten sind.

24. System gemäß einem der Ansprüche 20 bis 23, wobei das Computer-System (16) weiterhin Mittel umfasst, um eine Transaktion abzubrechen, wenn die aus der ersten Nachricht (17) gewonnene Kodierung nicht der Kodierung (14) entspricht, die in der zweiten Nachricht (24) enthalten ist.

25. System gemäß einem der Ansprüche 20 bis 24, wobei das erste Computer-System (2) geeignet ist, ein Programm durchzuführen, um die Daten (19) gemäß einem Kodierungsschlüssel (21) zu kodieren.

26. System gemäß einem der Ansprüche 20 bis 25, wobei das zweite Computer-System (16) geeignet ist, ein Programm durchzuführen, um die kodierten Daten (19) gemäß einem Dekodierungsschlüssel (27) zu dekodieren.

27. System gemäß Anspruch 26, wobei das zweite Computer-System (16) mit einer Datenbank (26) verbunden ist, die den Dekodierungsschlüssel (27) und die dritte Kodierung enthält.

## Revendications

1. Procédé de transmission de données sur un réseau de communication (3) auquel sont connectés au moins trois systèmes informatiques (2, 5, 16), ledit procédé consistant à:
envoyer un premier message (7) depuis un premier (2) desdits au moins trois systèmes informatiques à un second (5) desdits au moins trois systèmes informatiques (5), ledit premier message (7) contenant au moins un premier code (8) et des données (9, 10);
envoyer un second message (24) depuis le second système informatique (5) à au moins un troisième (16) desdits au moins trois systèmes informatiques, ledit second message (24) contenant un second code (14) ainsi que le premier code (8) et les données (9, 10);
envoyer un troisième message (17) depuis le premier système informatique (2) au troisième système informatique (16), ledit troisième message (17) contenant un troisième code (18)
**caractérisé en ce que**
ledit troisième message contient en outre des données codées (19) contenant le second code (14) et les donnée (9, 10) et **en ce que** le troisième système informatique (16) exécute les étapes consistant à:
décoder les données codées (19) pour extraire le second code (14) et les données (9, 10) des données codées (19);
générer un quatrième code sur la base du troisième code (18);
comparer les données extraites (9, 10) aux données (9, 10) contenues dans le second message (24);
comparer le code extrait (14) au second code (14) contenu dans le second message (24);
comparer le quatrième code au premier code (8) contenu dans le second message (24).

2. Procédé selon la revendication 1, dans lequel d'autres messages (32, 33) sont envoyés par le troisième système informatique (16) aux premier et second systèmes informatiques (2, 5) en fonction du résultat des étapes de comparaison au nombre d'au moins un.

3. Procédé selon l'une des revendications 1 et 2, dans lequel le second système informatique (5), après réception du premier message (7), envoie un quatrième message (13) au premier système informatique (2) contenant une confirmation de réception du premier message (7) ainsi que le second code (14).

4. Procédé selon l'une des revendications 1 à 3, dans lequel une transaction est interrompue si le quatrième code ne correspond pas au premier code (8) contenu dans le second message (24).

5. Procédé selon l'une des revendications 1 à 4, dans lequel une transaction est interrompue si les données extraites (9, 10) ne correspondent pas aux données (9, 10) contenues dans le second message (24).

6. Procédé selon l'une des revendications 1 à 5, dans lequel une transaction est interrompue si le code extrait (14) ne correspond pas au code (14) contenu dans le second message (24).

7. Procédé selon l'une des revendications 1 à 6, dans lequel les données codées (19) contenues dans le troisième message (17) sont codées au moyen d'un programme exécuté par le système informatique (2) conformément à une clé de codage (21).

8. Procédé selon l'une des revendications 1 à 7, dans lequel les données codées (19) contenues dans le troisième message (17) sont décodées au moyen d'un programme informatique exécuté par le système informatique (16) conformément à une clé de décodage (27).

9. Procédé selon la revendication 8, dans lequel la clé de décodage (27) est attribuée au troisième code (18) et contenue, conjointement avec ledit troisième code (18), dans une base de données (26) reliée au troisième système informatique (16).

10. Procédé selon la revendication 9, dans lequel la clé de décodage (27) est invalidée ou annulée après utilisation.

11. Système pour transmettre des données sur un réseau informatique (3), ledit système comprenant au moins un premier système informatique (2), un second système informatique (5) et un troisième système informatique (16) adaptés pour être reliés au réseau de communication (3), dans lequel
ledit au moins premier système informatique (2) est adapté pour envoyer au moins un premier message (7) à au moins le second système informatique (5), ledit premier message (7) contenant au moins un premier code (8) et des données (9, 10);
ledit au moins second système informatique (5) est adapté pour envoyer au moins un second message (24) au troisième système informatique (16), ledit second message (24) contenant un second code (14) ainsi que le premier code (8) et les données (9, 10);
ledit au moins premier système informatique (2) est adapté pour envoyer au moins un troisième message (17) audit au moins troisième système informatique (16), ledit troisième message (17) contenant un troisième code (18) ainsi que des données codées (19) contenant le second code (14) et les données (9, 10) ;
**caractérisé en ce que**
ledit premier système informatique (2) est adapté pour coder ledit second code (14) et les données (9, 10) et **en ce que** ledit au moins troisième système informatique (16) comprend des moyens pour exécuter les étapes suivantes:
décoder les données codées (19) pour extraire le second code (14) et les données (9, 10) des données codées (19);
générer un quatrième code sur la base du troisième code (18);
comparer les données extraites (9, 10) aux données (9, 10) contenues dans le second message (24);
comparer le code extrait (14) au second code (14) contenu dans le second message (24),
comparer le quatrième code au premier code (8) contenu dans le second message (24).

12. Système selon la revendication 11, dans lequel le troisième système informatique (16) est adapté pour envoyer d'autres messages (32, 33) aux premier et second systèmes informatiques (2, 5) en fonction du résultat d'au moins l'une des étapes de comparaison.

13. Système selon l'une des revendications 11 et 12, dans lequel le second système informatique (5) est adapté pour envoyer un quatrième message (13) au premier système informatique (2) après réception du premier message (7), ledit quatrième message (13) contenant une confirmation de réception du premier message (7) ainsi que le second code (14).

14. Système selon l'une des revendications 11 à 13, dans lequel le troisième système informatique (16) comprend, en outre, des moyens pour interrompre une transaction si le quatrième code généré ne correspond pas au premier code (8) contenu dans le second message (24).

15. Système selon l'une des revendications 11 à 14, dans lequel le troisième système informatique (16) comprend en outre des moyens pour interrompre une transaction si les données extraites (9, 10) ne correspondent pas aux données (9, 10) contenues dans le second message (24).

16. Système selon l'une des revendications 11 à 15, dans lequel le troisième système informatique (16) comprend en outre des moyens pour interrompre une transaction si le code extrait (14) ne correspond pas au second code (14) contenu dans le second message (24).

17. Système selon l'une des revendications 11 à 16, dans lequel le premier système informatique (2) est adapté pour exécuter un programme servant à coder les données (19) contenues dans le troisième message (17) conformément à une clé de codage (21).

18. Système selon l'une des revendications 11 à 17, dans lequel le troisième système informatique (16) est adapté pour exécuter un programme servant à décoder les données codées (19) contenues dans le troisième message (17) conformément à une clé de décodage (27).

19. Système selon la revendication 18, dans lequel le troisième système informatique (16) est relié à une base de données (26) contenant la clé de décodage (27) et le code (18).

20. Système pour transmettre des données sur un réseau informatique (3), ledit système comprenant au moins un premier système informatique (2) et un second système informatique (16) adaptés pour être reliés au réseau de communication (3), dans lequel
ledit au moins premier système informatique (2) est adapté pour envoyer audit au moins second système informatique (16) au moins un premier message (17), ledit premier message (17) contenant au moins un premier code (18) ainsi que des données codées (19) contenant un second code (14) et des données (9, 10);
**caractérisé en ce que**
ledit premier système informatique (2) est adapté pour coder ledit second code (14) et les données (9, 10) et **en ce que** ledit au moins second système informatique (16) comprend des moyens pour exécuter les étapes suivantes:
décoder les données codées (19) contenues dans le premier message (17) pour extraire le second code (14) et les données (9, 10) des données codées (19);
générer un troisième code sur la base du premier code (18);
comparer les données extraites (9, 10) aux données correspondantes (9, 10) contenues dans un second message (24);
comparer le code extrait (14) à un code correspondant (14) contenu dans le second message (24);
comparer le troisième code à un code correspondant (8) contenu dans le second message (24).

21. Système selon la revendication 20, dans lequel le second système informatique (16) est adapté pour envoyer d'autres messages (32, 33) au premier système informatique (2) en fonction du résultat d'au moins l'une des étapes de comparaison.

22. Système selon l'une des revendications 20 et 21, dans lequel le second système informatique (16) comprend, en outre, des moyens pour interrompre une transaction si le troisième code généré ne correspond pas au code (8) contenu dans le second message (24).

23. Système selon l'une des revendications 20 à 22, dans lequel le second système informatique (16) comprend en outre des moyens pour interrompre une transaction si les données (9, 10) extraites du premier message (17) ne correspondent pas aux données (9, 10) contenues dans le second message (24).

24. Système selon l'une des revendications 20 à 23, dans lequel le système informatique (16) comprend en outre des moyens pour interrompre une transaction si le code extrait du premier message (17) ne correspond pas au code (14) contenu dans le second message (24).

25. Système selon l'une des revendications 20 à 24, dans lequel le premier système informatique (2) est adapté pour exécuter un programme servant à coder les données (19) conformément à une clé de codage (21).

26. Système selon l'une des revendications 20 à 25, dans lequel le second système informatique (16) est adapté pour exécuter un programme servant à décoder les données codées (19) conformément à une clé de décodage (27).

27. Système selon la revendication 26, dans lequel le second système informatique (16) est relié à une base de données (26) contenant la clé de décodage (27) et le troisième code.
